# EUROPÄISCHE PATENTSCHRIFT

(11) **EP 1 309 475 B1**
(45) Veröffentlichungstag und Bekanntmachung des Hinweises auf die Patenterteilung: **09.02.2005**
(21) Anmeldenummer: 01967244.3
(22) Anmeldetag: 08.08.2001
(51) Int. Cl.: B60R 21/20

(54) **INSASSENSCHUTZVORRICHTUNG FÜR EIN FAHRZEUG UND VERFAHREN ZU DEREN HERSTELLUNG**
OCCUPANT PROTECTION DEVICE FOR A VEHICLE AND METHOD FOR PRODUCING THE SAME
DISPOSITIF DE PROTECTION DES OCCUPANTS D'UN VEHICULE ET SON PROCEDE DE PRODUCTION

(30) Priorität: 14.08.2000 DE 10040248
(43) Veröffentlichungstag der Anmeldung: 14.05.2003
(73) Patentinhaber: Magna Eybl Systemtechnik GmbH, 94315 Straubing (DE)
(72) Erfinder: KUSEBAUCH, Rolf, H., 94345 Obermotzing (DE); CHRISTOPH, Erich, 63179 Obertshausen (DE); BÖLLER, Manfred, 93492 Treffelstein (DE)
(74) Vertreter: Pfiz, Thomas, Dr.
(86) Internationale Anmeldenummer: PCT/EP2001/009165
(87) Internationale Veröffentlichungsnummer: WO 2002/014117

(56) Entgegenhaltungen:
- EP-A- 0 842 825
- EP-A- 1 106 446
- DE-A- 19 512 332
- DE-A- 19 645 866
- DE-U- 29 921 669
- US-A- 5 711 545
- US-E- R E36 167

## Beschreibung

Die Erfindung betrifft eine Insassenschutzvorrichtung für ein Fahrzeug, welches ein aus einem formsteifen Trägerteil und einer fahrzeuginnenraumseitig flächig damit verbundenen, vorzugsweise aus einer geschäumten Zwischenschicht und einer Dekorschicht gebildeten Abdeckung bestehendes, insbesondere als Instrumententafel ausgebildetes Innenteil aufweist, mit einem mittels eines Gasgenerators aufblasbaren und dabei eine Aufreißpartie des Innenteils zum Fahrzeuginnenraum hin durchdringenden Gassack.

Airbag-Systeme dieser Art werden als Aufprallschutzvorrichtung für die Insassen in Kraftfahrzeugen eingesetzt. Dabei wird eine Einheit aus Gasgenerator und in einen Schußkanal gepacktem Gassack an einer fahrzeugfesten Unterkonstruktion, beispielsweise an dem Querträger hinter der Instrumententafel für die Fahrgäste unsichtbar verdeckt montiert. Die Instrumententafel wie auch andere Innenverkleidungsteile bestehen üblicherweise aus einem formsteifen flächigen Trägerteil, einer darüberliegenden geschäumten Zwischenschicht und einer sichtseitig abschließenden Dekorschicht. Um das Durchdringen des Gassacks im Auslösefall zu ermöglichen, ist es bekannt, einen gesonderten Deckel in die Instrumententafel einzusetzen, welcher sich durch die explosionsgetriebene Entfaltung des Gassacks von innen aufstoßen läßt. Nachteilig hierbei ist der zusätzliche Herstellungsaufwand für den Deckel und die schwierige Abstimmung von Farbe und Finish passend zu der anschließenden Verkleidungsfläche.

Um eine zumindest in optischer Hinsicht ansprechendere Lösung zu finden, ist bereits vorgeschlagen worden, anstelle eines gesonderten Deckels eine Aufreißpartie in der Instrumententafel durch eingebrachte Sollbruchstellen zu definieren. Problematisch bleibt dabei nach wie vor, daß eine hohe Schußenergie für den Luftsack benötigt wird, insbesondere um die Durchstoßzone des aus einem schlagzähen Material bestehenden Trägerteils zu durchdringen, wodurch sich ein erhöhtes Verletzungsrisiko für die Fahrgäste ergibt. Hinzu kommt, daß das hinter der Instrumententafel angeordnete Airbagmodul einen beträchtlichen Bauraum beansprucht, der ansonsten für zusätzliche Anbauten wie das Handschuhfach auf der Beifahrerseite genutzt werden könnte.

In der US-A-5 711 545 wurde bereits vorgeschlagen, dass der Gassack zwischen einer den Gasgenerator aufnehmenden Ausformung des Trägerteils und der Abdeckung angeordnet ist.

Die gattungsgemäße DE-A-195 12 332 beschreibt eine Airbageinrichtung mit einem den Gasgenerator und Gassack enthaltenden Gehäusekörper, welcher durch einen gesonderten aufklappbaren Deckel verschlossen ist und in einen bereits vorhandenen Handschuhkasten einschiebbar ist.

Ausgehend hiervon liegt der Erfindung die Aufgabe zugrunde, eine Vorrichtung der gattungsgemäßen Art dahingehend zu verbessern, daß die vorstehend genannten Nachteile überwunden werden und daß bei vereinfachter Herstellung und hoher Funktionssicherheit eine optimale Integration in das Fahrzeug gewährleistet ist.

Zur Lösung dieser Aufgabe wird die in im Patentanspruch 1 angegebene Merkmalskombination vorgeschlagen. Vorteilhafte Ausgestaltungen und Weiterbildungen der Erfindung ergeben sich aus den abhängigen Ansprüchen.

Dementsprechend wird erfindungsgemäß vorgeschlagen, daß der Gassack als Faltpaket in einem mit dem Trägerteil fest verbindbaren Einbaugehäuse angeordnet ist, das Einbaugehäuse einen plattenförmigen Strömungsverteiler zur räumlich verteilten Beaufschlagung des Gassacks mit dem einströmenden Gas aufweist, wobei der Strömungsverteiler eine der Abdeckung zugewandte Decklage des Faltpakets in einem Zentralbereich flächig abstützt. Damit ist es möglich, den Gassack mit hoher Packungsdichte dem Trägerteil fahrzeuginnenraumseitig vorzulagern. Es wird ein geringerer Entfaltungsdruck benötigt, um die verbleibende Aufreißzone in der weichflexiblen Abdeckung zu durchdringen, so daß auch die Verletzungsgefahr für die Fahrgäste verringert wird. Insbesondere werden keine harten Bruchstücke aus dem Trägerteil abgesprengt, welche die Sicherheit der Insassen gefährden könnten. Durch die kompakte Bauform in dem Innenteil wird Bauraum eingespart, und es wird die Integration in den Herstellungsprozeß verbessert. Dabei wird eine stabile Außenkontur eingehalten, indem der plattenförmige Strömungsverteiler eine der Abdeckung zugewandte Decklage des Faltpakets in einem Zentralbereich flächig abstützt.

Gemäß einer besonders bevorzugten Ausgestaltung der Erfindung bildet das Faltpaket eine vorzugsweise flächenbündig an das Trägerteil anschließende Widerlagerfläche zur konturstabilen Abstützung der Abdeckung. Durch diese Maßnahme wird erreicht, daß sich der Einbaubereich sichtseitig in der Abdeckung nicht durch Konturveränderungen abzeichnet. Insbesondere können damit bei einer geschäumten Zwischenschicht reproduzierbare Schäumverhältnisse sichergestellt und ungleichmäßige Schaumwandstärken und unterschiedliche temperaturabhängige bzw. materialspezifische Ausdehnungen vermieden werden. Eine weitere Verbesserung in dieser Hinsicht läßt sich dadurch erreichen, daß die Faltlagen des Faltpakets auf Block aneinander liegen.

Denkbar ist es, daß die Faltlagen des Faltpakets durch beim Entfalten des Gassacks trennbare Verbindungsmittel, insbesondere durch Aufreißfäden oder Schmelzklebefäden in gegenseitiger Anlage miteinander verbunden sind.

Vorteilhafterweise ist das Faltpaket durch eine den Insassen zugekehrte Decklage und einen rückseitig umlaufend daran anschließenden mehrlagigen Ringfaltwulst gebildet. Damit wird im Gegensatz zu der herkömmlichen Klapp- oder Rollfaltung eine flächig ausgedehnte, in der Tiefe jedoch begrenzte Anordnung erreicht, welche an der Rückseite der Decklage eine große Einblasfläche zur Verfügung stellt, so daß mit geringem Aufblasdruck ein hinreichendes Aufreißvermögen sichergestellt ist. Auch in herstellungstechnischer Hinsicht ist es besonders günstig, wenn der Ringfaltwulst durch eine zickzackartige Balgfaltung quer zur Entfaltungsrichtung gefaltet ist.

Vorteilhafterweise besteht das Einbaugehäuse zur Aufnahme des Faltpakets aus einer Zentralplatte und einer um die Zentralplatte umlaufenden Nutwanne. Dabei ist es zur Vorfertigung des Faltpakets besonders vorteilhaft, wenn die Außenflanke der Nutwanne durch einen gesonderten Außenwandteil gebildet ist und der Gassack mit seinem Öffnungsrand im Fußbereich des Außenwandteils verankert ist. Zur sicheren Verankerung wird vorgeschlagen, daß der gegebenenfalls aus einem mehrteiligen Gewebezuschnitt bestehende Gassack einen Tunnelsaum als Öffnungsrand aufweist, und daß der Tunnelsaum segmentweise in hinterschnittenen Ausnehmungen des Einbaugehäuses durch Einsteckstäbe formschlüssig fixiert ist.

Gemäß einer weiteren vorteilhaften Ausgestaltung der Erfindung wird vorgeschlagen, daß das Einbaugehäuse einen durch eine mit einer Vielzahl von Durchströmöffnungen versehene Innenwand gebildeten Strömungsverteiler aufweist.

Eine stabile Bauform läßt sich dadurch erreichen, daß das Einbaugehäuse eine rückseitige Stützwand zur Begrenzung des Einblaskanals gegenüber dem Trägerteil aufweist. Hierbei kann die Gaszuführung auf einfache Weise dadurch erfolgen, daß das Einbaugehäuse einen im Einbauzustand das Trägerteil durchsetzenden Einlaßstutzen zum Anschluß an den Gasgenerator aufweist.

Weitere vorteilhafte Ausgestaltungen sehen vor, daß das Einbaugehäuse einen im Einbauzustand durch das Trägerteil hindurchgreifenden, vorzugsweise durch ein Absperrorgan verschließbaren Absaugstutzen zur Evakuierung des Aufnahmeraums für das Faltpaket aufweist, und daß das Einbaugehäuse an seiner dem Trägerteil zugewandten Rückseite über vorzugsweise als Schraubverbindungen ausgebildete Befestigungsmittel an dem Trägerteil verankerbar ist. Hierbei ist es von Vorteil, wenn das Einbaugehäuse unter Freihaltung eines Randspalts in eine formkomplementäre innenseitige Ausformung des Trägerteils einsetzbar ist und der Randspalt beim Schäumen der Zwischenschicht mit Schaumstoff ausfüllbar ist.

Ein weiterer Aspekt der Erfindung betrifft die integrale Kombination einer erfindungsgemäßen Insassenschutzvorrichtung mit einem Innenteil, bevorzugt einer Instrumententafel eines Fahrzeugs.

Im folgenden wird die Erfindung anhand eines in der Zeichnung in schematischer Weise dargestellten Ausführungsbeispiels näher erläutert. Es zeigen
- Fig. 1: ein in die Instrumententafel eines Kraftfahrzeugs integriertes Gassackmodul einer Airbag-Vorrichtung in einem Schnitt; und

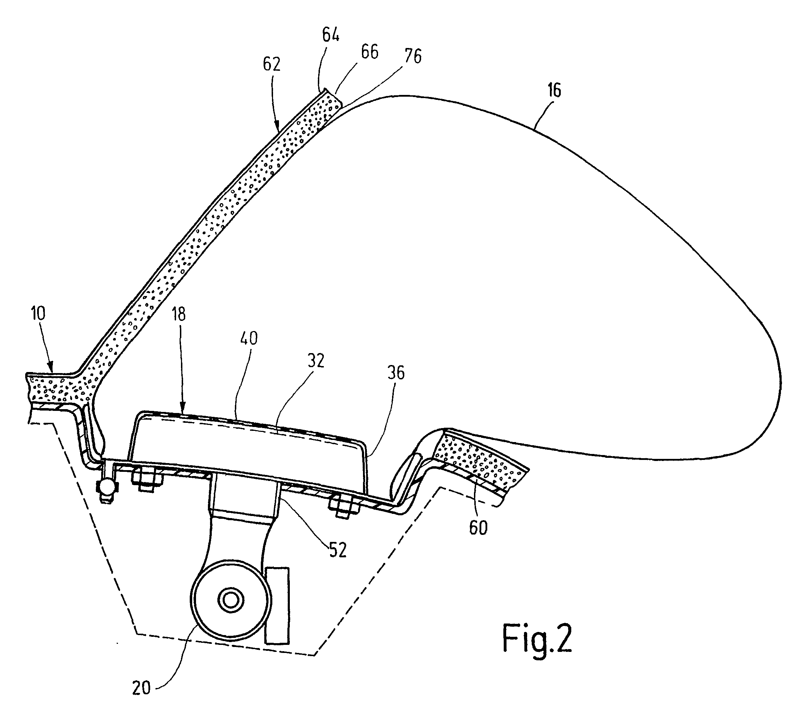

- Fig. 2: die Airbag-Vorrichtung im ausgelösten Zustand in einer Fig. 1 entsprechenden Darstellung.

Die in der Zeichnung dargestellte Airbag- bzw. Insassenschutz-Vorrichtung besteht im wesentlichen aus einem in eine mehrschichtige Instrumententafel 10 eines Kraftfahrzeugs verdeckt eingesetzten, ein Einbaugehäuse 12 und einen darin als kompaktes Faltpaket 14 angeordneten Gassack 16 umfassenden Gassackmodul 18 und einem hinter der Instrumententafel 10 befindlichen Gasgenerator 20 zum explosionsartigen Aufblasen des Gassacks 16 im Auslösefall.

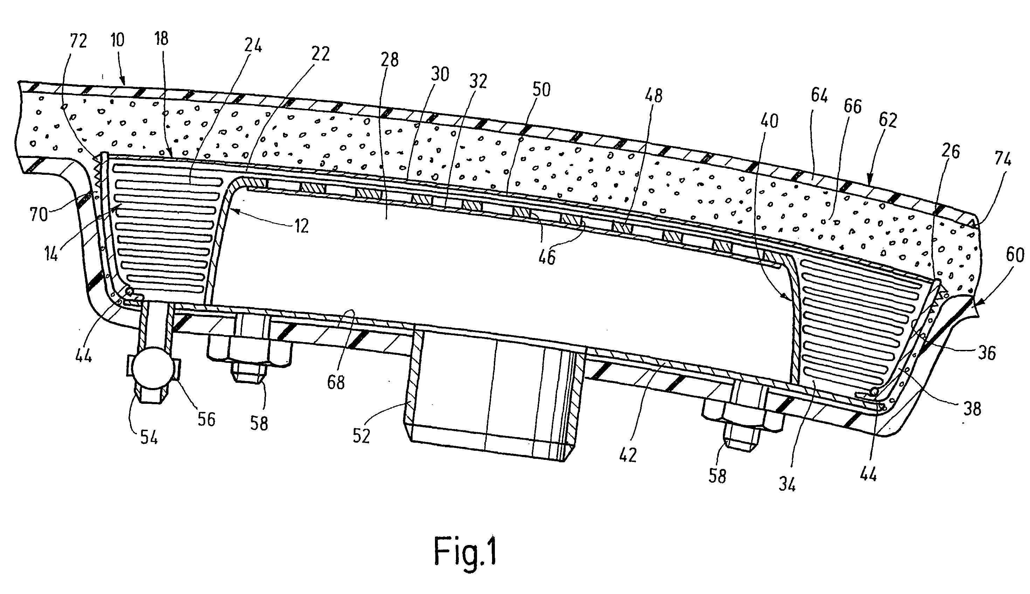

Wie aus Fig. 1 ersichtlich, ist das Faltpaket 14 durch eine dem Fahrgastraum zugewandte Decklage 22 und einen rückseitig umlaufend daran anschließenden Ringfaltwulst 24 gebildet. Um eine weitgehend hohlraumfreie kompakte Anordnung zu erreichen, ist der Ringfaltwulst 24 durch eine zickzack- bzw. Ziehharmonika-artige Balgfaltung quer zur Entfaltungsrichtung auf Block gefaltet.

Zur formstabilen Integration in die Instrumententafel 10 ist das Faltpaket 14 als evakuierte Vakuumpackung in dem Einbaugehäuse 12 in Form gehalten. Zu diesem Zweck ist das Einbaugehäuse 12 formkomplementär zu dem Faltpaket 14 wannenförmig ausgebildet und im Bereich einer fahrgastraumseitigen Enfaltungsöffnung 26 und eines davon abgewandten rückseitigen Einblaskanals 28 jeweils durch eine unter erhöhtem Gasdruck aufreißbare flexible Abdichtfolie 30, 32 unter Begrenzung eines evakuierten Aufnahmeraums 34 für das Faltpaket 14 gasdicht verschlossen.

Aus herstellungstechnischen Gründen ist das Einbaugehäuse 12 mehrteilig zusammengesetzt. Dabei wird die Außenflanke einer den Aufnahmeraum 34 begrenzenden umlaufenden Nutwanne 36 durch ein gesondertes Außenwandteil 38 gebildet, während ein dom- oder hutförmiges Innenwandteil 40 zur Abtrennung des innenliegenden Einblaskanals 28 vorgesehen ist. Die genannten Wandteile 38, 40 sind fest mit einer die Rückseite des Einbaugehäuses 12 bildenden Stützwand 42 verbunden.

Das Außenwandteil 38 dient zur randseitigen Verankerung des Gassacks 16, so daß eine maschinelle Vorfertigung des Faltpakets 14 möglich ist. Zu diesem Zweck weist der aus einem Gewebezuschnitt bestehende Gassack 16 einen verstärkten Tunnelsaum als Öffnungsrand auf, welcher segmentweise in hinterschnittenen Ausnehmungen im Fußbereich des Außenwandteils 38 durch Einsteckstäbe 44 formschlüssig fixiert ist.

Das Innenwandteil 40 bildet mit seiner mit Durchströmöffnungen 46 versehenen gelochten Zentralplatte 48 einen Strömungsverteiler zur räumlich verteilen und gegebenenfalls speziell ausgerichteten Gasführung. Zugleich stützt die Zentralplatte 48 die Decklage 22 des Faltpakets 14 in einem Zentralbereich flächig ab, während der Randbereich der Decklage 22 durch den darunterliegenden kompakten Ringfaltwulst 24 stabilisiert wird. Auf diese Weise bildet das Gassackmodul 18 mit seinem Faltpaket 14 eine konturstabile Widerlagerfläche 50, welche den weiter unten erläuterten Einbau in die Instrumententafel 10 begünstigt.

Die Stützwand 42 ist mit einem rückseitigen Einlaßstutzen 52 zum Anschluß an den Gasgenerator 20 versehen. Daneben ist ein gesonderter Absaugstutzen 54 vorgesehen, welcher in der Aufnahmekammer 34 mündet und durch ein Absperrventil 56 verschließbar ist. An der Rückseite der Stützwand 42 abstehende Schraubbolzen 58 ermöglichen eine sichere Verbindung des Gassackoduls 18 mit der Instrumententafel 10.

Die Instrumententafel 10 besteht in an sich bekannter Weise aus einem formsteifen schlagzähen Trägerteil 60 und einer flächig damit verbundenen, dem Fahrzeuginnenraum zugewandten energieabsorbierenden Abdeckung 62, welche einen weiteren Beitrag zur Erhöhung der Fahrgastsicherheit liefert. Um auch ästhetischen Ansprüchen zu genügen, ist die Abdeckung 62 aus einer Außen- bzw. Dekorschicht 64 und einer die Verbindung zu dem Trägerteil 60 herstellenden geschäumten Zwischenschicht 66 zweischichtig ausgebildet. Das Trägerteil kann als Spritzgußteil beispielsweise aus Acrylnitril-Butadien-Styrol-Polycarbonat bestehen oder als Metall-Kunststoff-Verbundteil ausgebildet sein, während die Dekorschicht beispielsweise als Slushhaut aus Polyvinylchlorid gebildet ist und die Zwischenschicht zweckmäßig aus viskoelastischem oder halbhartem Polyurethanschaum besteht. Festzuhalten bleibt, daß das Trägerteil die integrale Tragkonstruktion des Innen- bzw. Verkleidungsteils bildet und nicht mit Rahmenteilen des Fahrzeugs wie dem Querträger hinter der Instrumententafel zu verwechseln ist. Grundsätzlich kommen für den Einbau der Gassack-Vorrichtung nicht nur die Instrumententafel, sondern auch andere Fahrzeuginnenteile wie Seiten- und Türverkleidungen in Frage.

Zum Einbau wird das vorgefertigte Gassackmodul 18 in eine formkomplementäre Ausformung 68 des Trägerteils 60 eingesetzt und darin mittels Schraubverbindungen 58 gesichert. Dabei bleibt ein Randspalt 70 freigehalten, um beim Ausschäumen eine zusätzliche Verankerung durch den eindringenden und gegebenenfalls in Umfangszahnungen 72 des Außenwandteils 38 formschlüssig eingreifenden Schaumstoff zu erreichen. In einem weiteren Vorbereitungsschritt wird die Dekorschicht 64 innenseitig mit einer Schwächungslinie 74 versehen, welche als Sollbruchstelle eine Aufreißpartie 76 für den sich im Auslösefall unter Gasdruck entfaltenden Gassack 16 definiert. Die auf diese Weise vorbereiteten Teile 60, 64 werden dann in die Formhälften eines Schäumwerkzeugs eingelegt und durch die anschließend geschäumte Zwischenschicht 66 miteinander verbunden. Dabei kann aufgrund der kompakten formstabilen Ausbildung des Gassackmoduls 18 eine im wesentlichen konstante Dicke der Zwischenschicht eingehalten werden, wodurch sich ungewollte sichtseitige Konturveränderungen der Instrumententafel 10 auch bei extremen Temperaturschwankungen verhindern lassen. Um Luftblaseneinschlüsse zu vermeiden, sollte die Abdichtfolie 30 beim Einschäumen fest mit der Zwischenschicht verklebt werden. Gegebenenfalls kann dies unter Verwendung eines geeigneten Haftvermittlers erfolgen.

## Patentansprüche

1. Insassenschutzvorrichtung für ein Fahrzeug, welches ein aus einem formsteifen Trägerteil (60) und einer flächig damit verbundenen, vorzugsweise aus einer geschäumten Zwischenschicht (66) und einer Dekorschicht (64) gebildeten Abdeckung (62) bestehendes, insbesondere als Instrumententafel ausgebildetes Innenteil (10) aufweist, mit einem mittels eines Gasgenerators (20) aufblasbaren und dabei eine Aufreißpartie (76) des Innenteils (10) zum Fahrzeuginnenraum hin durchdringenden Gassack (16), **dadurch gekennzeichnet, daß** der Gassack (16) als Faltpaket (14) in einem mit dem Trägerteil (60) fest verbindbaren Einbaugehäuse (12) angeordnet ist, das Einbaugehäuse (12) einen plattenförmigen Strömungsverteiler (48) zur räumlich verteilten Beaufschlagung des Gassacks (16) mit dem einströmenden Gas aufweist, wobei der Strömungsverteiler (48) eine der Abdeckung (62) zugewandte Decklage (22) des Faltpakets (14) in einem Zentralbereich flächig abstützt.

2. Insassenschutzvorrichtung nach Anspruch 1, **dadurch gekennzeichnet, daß** das Faltpaket (14) eine vorzugsweise flächenbündig an das Trägerteil (60) anschließende Widerlagerfläche (50) zur konturstabilen Abstützung der Abdeckung (62) bildet.

3. Insassenschutzvorrichtung nach Anspruch 1 oder 2, **dadurch gekennzeichnet, daß** die Faltlagen des Faltpakets (14) auf Block aneinander liegen.

4. Insassenschutzvorrichtung nach einem der Ansprüche 1 bis 3, **dadurch gekennzeichnet, daß** die Faltlagen des Faltpakets (14) durch beim Entfalten des Gassacks (16) trennbare Verbindungsmittel, insbesondere durch Aufreißfäden oder Schmelzklebefäden in gegenseitiger Anlage miteinander verbunden sind.

5. Insassenschutzvorrichtung nach einem der Ansprüche 1 bis 4, **dadurch gekennzeichnet, daß** das Faltpaket (14) durch eine den Insassen zugekehrte Decklage (22) und einen rückseitig umlaufend daran anschließenden mehrlagigen Ringfaltwulst (24) gebildet ist.

6. Insassenschutzvorrichtung nach Anspruch 5, **dadurch gekennzeichnet, daß** der Ringfaltwulst (24) durch eine zickzackartige Balgfaltung quer zur Entfaltungsrichtung gefaltet ist.

7. Insassenschutzvorrichtung nach einem der Ansprüche 1 bis 6, **dadurch gekennzeichnet, daß** das Einbaugehäuse (12) eine Zentralplatte (48) als Strömungsverteiler und eine um die Zentralplatte (48) umlaufende Nutwanne (36) zur Aufnahme des Faltpakets (14) aufweist.

8. Insassenschutzvorrichtung nach Anspruch 7, **dadurch gekennzeichnet, daß** die Außenflanke der Nutwanne (36) durch einen gesonderten Außenwandteil (38) gebildet ist, und daß der Gassack (16) mit seinem Öffnungsrand im Fußbereich des Außenwandteils (38) verankert ist.

9. Insassenschutzvorrichtung nach einem der Ansprüche 7 und 8, **dadurch gekennzeichnet, daß** der gegebenenfalls aus einem mehrteiligen Gewebezuschnitt bestehende Gassack (16) einen Tunnelsaum als Öffnungsrand aufweist, und daß der Tunnelsaum segmentweise in hinterschnittenen Ausnehmungen des Einbaugehäuses (40) durch Einsteckstäbe (44) formschlüssig fixiert ist.

10. Insassenschutzvorrichtung nach einem der Ansprüche 7 bis 9, **dadurch gekennzeichnet, daß** das Einbaugehäuse (12) einen durch eine mit einer Vielzahl von Durchströmöffnungen (46) versehene Innenwand gebildeten Strömungsverteiler (48) aufweist.

11. Insassenschutzvorrichtung nach einem der Ansprüche 7 bis 10, **dadurch gekennzeichnet, daß** das Einbaugehäuse (12) eine rückseitige Stützwand (42) zur Begrenzung des Einblaskanals (28) gegenüber dem Trägerteil (60) aufweist.

12. Insassenschutzvorrichtung nach einem der Ansprüche 7 bis 11, **dadurch gekennzeichnet, daß** das Einbaugehäuse (12) einen im Einbauzustand das Trägerteil (60) durchsetzenden Einlaßstutzen zum Anschluß an den Gasgenerator aufweist.

13. Insassenschutzvorrichtung nach einem der Ansprüche 7 bis 12, **dadurch gekennzeichnet, daß** das Einbaugehäuse (12) einen im Einbauzustand durch das Trägerteil (60) hindurchgreifenden, vorzugsweise durch ein Absperrorgan (56) verschließbaren Absaugstutzen (54) zur Evakuierung des Aufnahmeraums (34) für das Faltpaket (14) aufweist.

14. Insassenschutzvorrichtung nach einem der Ansprüche 7 bis 13, **dadurch gekennzeichnet, daß** das Einbaugehäuse (12) an seiner dem Trägerteil (60) zugewandten Rückseite über vorzugsweise als Schraubverbindungen ausgebildete Befestigungsmittel (58) an dem Trägerteil (60) verankerbar ist.

15. Insassenschutzvorrichtung nach einem der Ansprüche 7 bis 14, **dadurch gekennzeichnet, daß** das Einbaugehäuse (12) unter Freihaltung eines Randspalts (70) in eine formkomplementäre innenseitige Ausformung (68) des Trägerteils (60) einsetzbar ist, und daß der Randspalt (70) beim Schäumen der Zwischenschicht (66) mit Schaumstoff ausfüllbar ist.

16. Fahrzeuginnenteil, insbesondere Instrumententafel eines Kraftfahrzeugs, **gekennzeichnet durch** eine integrierte Insassenschutzvorrichtung nach einem der vorhergehenden Ansprüche.

## Claims

1. Passenger protection device for a vehicle, which has an internal part (10) designed in particular as an instrument panel and comprising a dimensionally stable carrier part (60) and a cover (62), which is connected thereto in a two-dimensional manner and formed preferably by a foamed intermediate layer (66) and a decorative layer (64), comprising an air bag (16), which is inflatable by means of a gas generator (20) and in said case penetrates a tear-open portion (76) of the internal part (10) in the direction of the vehicle interior, **characterized in that** the air bag (16) is disposed as a folded package (14) in a built-in housing (12) firmly connectable to the carrier part (60), the built-in housing (12) has a plate-shaped flow distributor (48) for spatially distributed loading of the air bag (16) with the inflowing gas, wherein the flow distributor (48) in a central region provides two-dimensional support for a top layer (22) of the folded package (14) facing the cover (62).

2. Passenger protection device according to claim 1, **characterized in that** the folded package (14) for contour-stable support of the cover (62) forms an abutment surface (50), which preferably adjoins the carrier part (60) in a superficially flush manner.

3. Passenger protection device according to claim 1 or 2, **characterized in that** the folded layers of the folded package (14) lie closely adjacent to one another.

4. Passenger protection device according to one of claims 1 to 3, **characterized in that** the folded layers of the folded package (14) are connected to one another in a mutually abutting manner by connecting means that are disconnectable upon deployment of the air bag, in particular by rip threads or hot-melt adhesive threads.

5. Passenger protection device according to one of claims 1 to 4, **characterized in that** the folded package (14) is formed by a top layer (22) facing the passenger and by a multilayer annular folded bead (24) adjoining and extending round the rear of said top layer.

6. Passenger protection device according to claim 5, **characterized in that** the annular folded bead (24) is folded by means of a zigzag bellows-type fold transversely to the direction of deployment.

7. Passenger protection device according to one of claims 1 to 6, **characterized in that** the built-in housing (12) comprises a central plate (48) as a flow distributor and a grooved trough (36) extending around the central plate (48) for receiving the folded package (14).

8. Passenger protection device according to claim 7, **characterized in that** the outer flank of the grooved trough (36) is formed by a separate outer wall part (38), and that the air bag (16) is anchored by its opening edge in the foot region of the outer wall part (38).

9. Passenger protection device according to one of claims 7 and 8, **characterized in that** the air bag (16), which is optionally made from a complex woven fabric blank, has a tunnel seam as an opening edge, and that the tunnel seam is positively fixed in segments by means of push-in bars (44) in undercut recesses of the built-in housing (40).

10. Passenger protection device according to one of claims 7 to 9, **characterized in that** the built-in housing (12) has a flow distributor (48), which is formed by an inner wall provided with a plurality of flow openings (46) .

11. Passenger protection device according to one of claims 7 to 10, **characterized in that** the built-in housing (12) has a rear support wall (42) for delimiting the air admission channel (28) from the carrier part (60).

12. Passenger protection device according to one of claims 7 to 11, **characterized in that** the built-in housing (12) for the connection to the gas generator has an admission connection piece, which in the fitted state penetrates the carrier part (60).

13. Passenger protection device according to one of claims 7 to 12, **characterized in that** the built-in housing (12) for evacuation of the location space (34) for the folded package (14) has an extraction connection piece (54), which in the fitted state engages through the carrier part (60) and is closable preferably by means of a shut-off element (56).

14. Passenger protection device according to one of claims 7 to 13, **characterized in that** the built-in housing (12) at its rear facing the carrier part (60) is anchorable to the carrier part (60) by fastening means (58) preferably in the form of screw connections.

15. Passenger protection device according to one of claims 7 to 14, **characterized in that** the built-in housing (12) is insertable, while simultaneously leaving free a marginal gap (70), into an inner recess (68) of the carrier part (60) that has a complementary shape, and that upon foaming of the intermediate layer (66) the marginal gap (70) is fillable with foam material.

16. Vehicle internal part, in particular an instrument panel of a motor vehicle, **characterized by** an integrated passenger protection device according to one of the preceding claims.

## Revendications

1. Dispositif de protection pour les occupants d'un véhicule, qui comporte une partie intérieure (10) réalisée notamment en tant que tableau de bord et composée d'un support indéformable (60) et d'un recouvrement ou revêtement (62) relié en nappe à ce dernier et formé par une couche intermédiaire en mousse (66) et une couche décorative (64), et qui est doté d'un coussin gonflable (16) pouvant être gonflé par un gazogène (20) et traversant à cette occasion une partie déchirable (76) de la partie intérieure (10) pour pénétrer dans l'habitacle du véhicule, **caractérisé en ce que** le coussin gonflable (16) est logé sous forme de paquet plié en soufflets (14) dans un boîtier de montage (12) pouvant être relié fixement au support (60), **en ce que** le boîtier de montage (12) présente un diffuseur (48) en forme de plaque pour que le gaz qui pénètre dans le coussin gonflable (16) sollicite ce dernier en plusieurs endroits répartis dans l'espace, le diffuseur (48) supportant en nappe, dans une partie centrale, une couche supérieure (22) du paquet plié en soufflets (14) qui est tournée vers le recouvrement (62).

2. Dispositif de protection pour les occupants d'un véhicule selon la revendication 1, **caractérisé en ce que** le paquet plié en soufflets (14) forme une surface de butée (50), reliée, de préférence de manière affleurante, au support (60), afin de soutenir fermement le recouvrement (62) sur le contour.

3. Dispositif de protection pour les occupants d'un véhicule selon la revendication 1 ou 2, **caractérisé en ce que** les couches du paquet plié en soufflets (14) sont étroitement appliquées les unes contre les autres.

4. Dispositif de protection pour les occupants d'un véhicule selon l'une des revendications 1 à 3, **caractérisé en ce que** les couches du paquet plié en soufflets (14) sont maintenues reliées les unes aux autres par des moyens de liaison pouvant être supprimés par le déploiement du coussin gonflable (16), notamment par des fils se rompant ou des filets de colle fusible.

5. Dispositif de protection pour les occupants d'un véhicule selon l'une des revendications 1 à 4, **caractérisé en ce que** le paquet plié en soufflets (14) est formé par une couche supérieure (22) tournée vers les occupants du véhicule et par un tore à plusieurs couches (24) se raccordant à cette dernière et l'entourant au niveau de sa partie arrière

6. Dispositif de protection pour les occupants d'un véhicule selon la revendication 5, **caractérisé en ce que** le tore (24) est plié en zigzag à la manière d'un soufflet transversalement à la direction de déploiement.

7. Dispositif de protection pour les occupants d'un véhicule selon l'une des revendications 1 à 6, **caractérisé en ce que** le boîtier de montage (12) comporte une plaque centrale (48) faisant office de diffuseur et une rainure en forme de cuvette (36) entourant la plaque centrale (48) et étant destinée à recevoir le paquet plié (14).

8. Dispositif de protection pour les occupants d'un véhicule selon la revendication 7, **caractérisé en ce que** le flanc extérieur de la rainure en forme de cuvette (36) est formée par une partie de paroi extérieure séparée (38), et **en ce que** le coussin gonflable (16) est ancré par son bord d'ouverture dans la zone de la base de la partie de paroi extérieure (38).

9. Dispositif de protection pour les occupants d'un véhicule selon l'une des revendications 7 et 8, **caractérisé en ce que** le coussin gonflable (16) éventuellement composé d'une pièce de tissu en plusieurs parties présente un ourlet en tunnel en tant que bord d'ouverture, et **en ce que** l'ourlet en tunnel est fixé par engagement positif, segment par segment, à l'aide de baguettes (44) encastrées dans des évidements en contre-dépouille du boîtier de montage (40).

10. Dispositif de protection pour les occupants d'un véhicule selon l'une des revendications 7 à 9, **caractérisé en ce que** le boîtier de montage (12) présente un diffuseur (48) formé par une paroi interne dotée de nombreux orifices de passage (46).

11. Dispositif de protection pour les occupants d'un véhicule selon l'une des revendications 7 à 10, **caractérisé en ce que** le boîtier de montage (12) présente une paroi d'appui arrière (42) pour séparer le canal de gonflage (28) du support (60).

12. Dispositif de protection pour les occupants d'un véhicule selon l'une des revendications 7 à 11, **caractérisé en ce que** le boîtier de montage (12) présente une tubulure d'admission traversant le support (60) à l'état monté, afin de raccorder ledit boîtier au gazogène.

13. Dispositif de protection pour les occupants d'un véhicule selon l'une des revendications 7 à 12, **caractérisé en ce que** le boîtier de montage (12) présente une tubulure d'aspiration (54) pouvant, de préférence, être fermée par un organe d'arrêt (56), qui traverse à l'état monté le support (60) et qui est destinée à faire le vide dans l'espace (34) renfermant le paquet plié (14).

14. Dispositif de protection pour les occupants d'un véhicule selon l'une des revendications 7 à 13, **caractérisé en ce que** le boîtier de montage (12) peut être ancré au support (60) par sa face arrière tournée vers ledit support (60) par l'intermédiaire de moyens de fixation (58) réalisés de préférence sous forme de dispositifs d'assemblage à vis.

15. Dispositif de protection pour les occupants d'un véhicule selon l'une des revendications 7 à 14, **caractérisé en ce que** le boîtier de montage (12) peut être logé, en laissant une fente périphérique (70), dans un évidement interne (68) du support (60), dont la forme est complémentaire, et **en ce que** la fente périphérique (70) peut être remplie de mousse lors de la mise en place de la couche de mousse intermédiaire (66).

16. Élément intérieur de véhicule, notamment tableau de bord d'un véhicule automobile, **caractérisé par** un dispositif de protection pour les occupants selon l'une des revendications précédentes.
